# DEMANDE DE BREVET EUROPEEN

(11) **EP 0 731 341 A1**
(43) Date de publication de la demande: **11.09.1996**
(21) Numéro de dépôt: 96400448.5
(22) Date de dépôt: 01.03.1996
(51) Int. Cl.: G01F 23/04, G01F 23/292

(54) **Dispositif de repérage de la position de séparation entre deux milieux, réceptable et procédé de détection à l'aide du dispositif**

(30) Priorité: 03.03.1995 FR 9502527
(71) Demandeur: EPARCO, F-75009 Paris (FR)
(72) Inventeur: Philip, Hervé, F-34570 Pignan (FR); Maunoir, Siegfried, F-34000 Montpellier (FR)
(74) Mandataire: Derambure, Christian

(57) **Abrégé**

Dispositif de repérage de la position de la séparation entre deux milieux fluides présentant des caractéristiques physiques spécifiques différentes, caractérisé par le fait que les moyens d'émission d'ondes, de réception d'ondes et de transmission d'ondes (15, 16, 20) sont de type optique.

## Description

L'invention concerne un dispositif de repérage de la position de la séparation entre deux milieux fluides présentant des caractéristiques physiques spécifiques différentes et elle s'applique plus spécifiquement à la détection de niveau ou la mesure de la hauteur des boues accumulées au fond d'un réceptacle tel qu'une fosse septique.

Le problème de la mesure de la hauteur des boues accumulées se pose dans un certain nombre de circonstances. Il peut s'agir d'ouvrages ou de procédés de traitement des eaux tels que les décanteurs, les fosses septiques, les digesteurs ou encore les lagunes d'épuration. Plus généralement, il s'agit de tout milieu liquide naturel ou artificiel ou des sédiments peuvent être accumulés.

On connaît déjà des dispositifs destinés à détecter le niveau des boues ou mesurer la hauteur des boues accumulées dans un tel contexte. Ces dispositifs sont décrits dans les brevets US-S-4.673.819 et US-A-3.551.670.

On connaît également des détecteurs à infra-rouges qui sont d'une technologie sophistiquée. Ainsi le brevet américain US-A-3.551.670 décrit un détecteur de niveau de boues à infrarouge. Ce dispositif présente l'inconvénient de nécessiter un câblage électrique important et un support rigide, ce qui rend le dispositif encombrant, difficilement amovible et renforce la difficulté d'entretien.

L'invention a donc pour but de remédier aux inconvénients précités et visent plus spécialement à proposer un dispositif qui, tout à la fois, soit précis, simple d'emploi et peu onéreux.

A cet effet, l'invention propose un dispositif de repérage de la position de la séparation entre deux milieux fluides présentant des caractéristiques physiques spécifiques différentes comportant des moyens d'émission d'ondes, des moyens de réception d'ondes et des moyens de transmission d'ondes de type optique.

L'invention concerne également un réceptacle tel qu'une fosse septique ou autre application analogue, destinée à recevoir des milieux fluides notamment des boues accumulées au fond et de l'eau décantée en surface, auxquel est associé au moins un dispositif tel que précédemment mentionné.

Les caractéristiques de l'invention résulteront de la description qui suivra en référence aux dessins annexés dans lesquels :

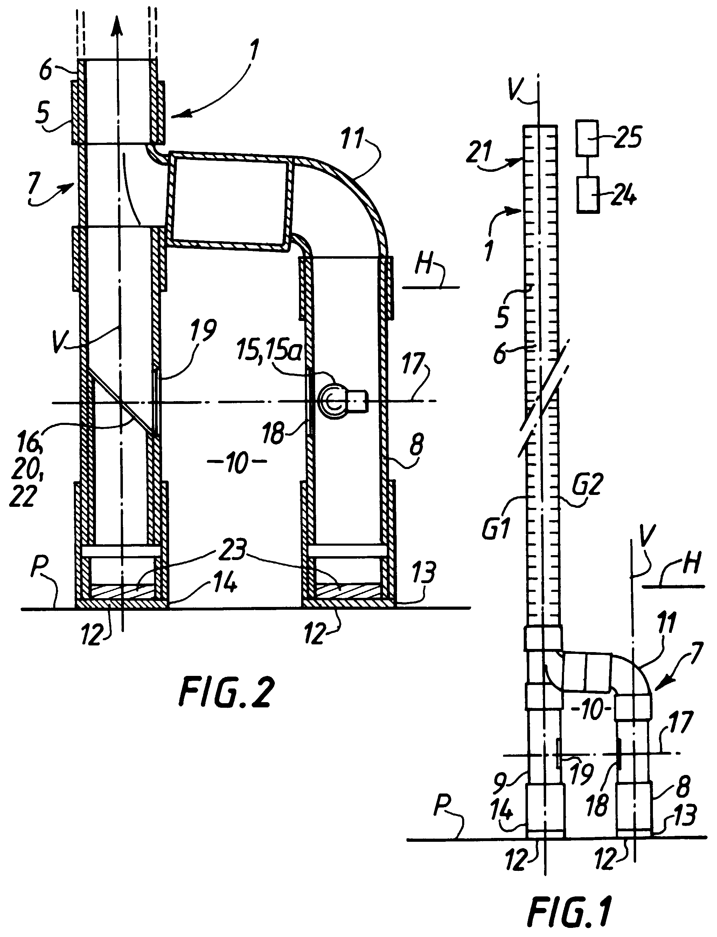

- la figure 1 est une vue schématique, en élévation, du dispositif selon l'invention dans un mode de réalisation ;
- la figure 2 est une vue schématique, partielle, en coupe axiale, à plus grande échelle, du dispositif de la figure 1 ;

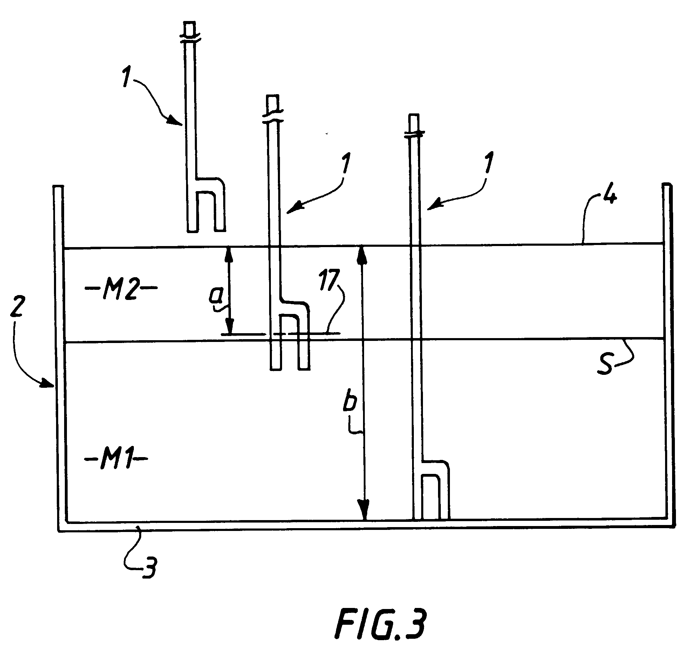

- la figure 3 est une vue schématique en coupe par un plan vertical illustrant la mise en oeuvre du dispositif dans le cas d'un réceptacle contenant des boues au fond et au-dessus de l'eau décantée.

Le dispositif 1 assure le repérage de la position de la séparation S entre deux milieux fluides M1 et M2 présentant des caractéristiques physiques spécifiques différentes.

Le dispositif 1 constitue un dispositif de détection du niveau ou de mesure de la hauteur des boues accumulées au fond d'un réceptacle 2 tel qu'une fosse septique.

Dans ce cas, le milieu M1 est constitué par lesdites boues et le milieu M2 par de l'eau décantée.

Les boues du milieu M1 reposent sur le fond 3 du réceptacle. L'eau décantée du milieu M2 est située au-dessus des boues M1 et définit la surface libre 4 du contenu M1/M2 du réceptacle. Entre les boues du milieu M1 et l'eau décantée du milieu M2 il existe une séparation S.

On admet que le fond 3 est sensiblement plan et horizontal et que la surface est elle-même sensiblement plane et horizontale.

Toutefois, l'invention est applicable lorsque tel n'est pas exactement le cas.

L'invention concerne des applications analogues à la fosse septique ainsi qu'à d'autres milieux fluides.

Les caractéristiques physiques qui sont considérées pour les milieux M1 et M2 sont des caractéristiques optiques notamment la transparence ou l'opacité.

Le dispositif 1 comporte un support 5, rigide, étendu le long d'une direction longitudinale V. Lors de la mise en oeuvre du dispositif dans le cas d'une fosse septique, la direction longitudinale V est la direction verticale.

Dans la réalisation représentée sur les dessins, le support 5 comprend un tube principal 6 prolongé et terminé vers sa première partie extrême 7 par un premier et un second tronçons de tubes 8, 9.

Le tube 6 et les tronçons de tubes 8, 9 s'étendent en direction longitudinale. Les deux tronçons de tubes 8, 9 sont parallèles entre eux et écartés l'un de l'autre. Un espace libre 10 étant ménagé entre eux.

Le tube 6 et le second tronçon de tube 9 sont coaxiaux tandis que le premier tronçon de tube 8 est écarté de l'ensemble colinéaire formé par le tube 6 et le second tronçon de tube 9.

Il est prévu un coude 11 entre le premier tronçon de tube 8 et l'interface entre le tube 6 et le second tronçon de tube 9.

Les deux tronçons de tube 8, 9 sont fermés par des bouchons 12 vers leurs extrémités libres et notamment à leurs extrémités libres respectivement 13, 14. Ces deux extrémités libres 13, 14 sont situées dans un même plan P transversal par rapport à la direction longitudinale V.

Dans la réalisation décrite, le tube 6 et les tronçons de tubes 8, 9 sont en communication intérieure les uns avec les autres.

Le tube 6 s'étend dans la direction longitudinale V sur une longueur substantielle nettement plus grande que celle des premier et second tronçons 8, 9.

Par exemple, les tubes 6, tronçons de tubes 8, 9 peuvent avoir un diamètre de l'ordre de 40 mm environ. Les deux tronçons de tubes 8, 9 peuvent avoir une longueur de l'ordre de 15 cm ; le tube 6 peut avoir une longueur de l'ordre de 1m50. L'écartement entre les deux tronçons de tube 8, 9 peut être de l'ordre de 7 cm.

Ces données sont purement indicatives d'une réalisation ayant donné toute satisfaction.

Le support 5 et notamment le tube 6 peut être télescopique. Il est alors réalisé en plusieurs parties. Ces parties sont associées entre elles à demeure ou non (non représenté).

Le dispositif 1 comporte des moyens 15 d'émission d'ondes et des moyens 16 de réception des ondes émises par les moyens 15.

Les moyens 15 et 16 sont renfermés respectivement par les premier et second tronçons de tube 8, 9.

Les moyens d'émission et de réception d'ondes 15, 16 sont portés par le support 5 vers sa première partie extrême libre 7. Ces moyens d'émission et de réception d'ondes 15, 16 sont dirigés selon un même axe 17 s'étendant parallèlement à une direction transversale H orthogonale à la direction longitudinale V.

Dans la mise en oeuvre envisagée, la direction transversale H est horizontale.

Les deux tronçons de tube 8, 9 sont pourvus chacun d'une fenêtre 18, 19, respectivement disposés latéralement. Les deux fenêtres 18, 19 sont tournées vers l'espace 10 et ont pour axe l'axe 17. Les moyens d'émission 15 et de réception 16 sont placés en regard des fenêtres correspondantes 18, 19.

Les fenêtres 18, 19, protégées, sont aptes au passage des ondes émises/reçues par les moyens d'émission 15, de réception 16.

Le dispositif 1 comporte des moyens 20 de transmission des ondes reçues par les moyens de réception 16. Ces moyens de transmission 20 sont logés dans le second tronçon 9, respectivement le tube 6.

Les moyens de transmission 20 assurent la transmission des ondes reçues par les moyens de réception 16 le long du support 5 et jusque vers sa seconde partie extrême 21 opposée au deux tronçons 8, 9.

Les ondes émises, reçues, transmises grâce aux moyens 15, 16, 20 sont choisies pour avoir des caractéristiques physiques fonction des caractéristiques physiques spécifiques du milieu fluide M1, M2 où se trouvent les moyens d'émission 15, de réception 16.

Selon l'invention, les moyens d'émission 15, de réception 16 et de transmission 20 sont de type optique.

Il est prévu des moyens 22 de renvoi des ondes reçues par les moyens de réception 16 le long de l'axe 17 de direction transversale selon une direction longitudinale correspondant à l'axe du second tronçon de tube 9 et du tube 6.

Dans la réalisation représentée, les moyens de réception 16 et les moyens de renvoi 22 sont communs et se présentent sous la forme d'un miroir incliné à 45° sur la direction longitudinale V. Ce miroir fait partie des moyens de transmission 20. Les moyens d'émission 15 se présentent sous la forme de moyens d'émission d'une lumière blanche.

Dans ce cas, ces moyens 15 comportent une source lumineuse 15a et des moyens d'alimentation électrique de celle-ci, non représentés.

Compte tenu de la structure décrite, il apparaît que les moyens d'émission 15 et de réception 16 sont écartés l'un de l'autre d'une distance connue le long de la direction 17 et séparés par l'espace libre 10 dans lequel peut se trouver le milieu M1, M2.

Le dispositif 1 comprend des moyens d'analyse 24 des ondes transmises par les moyens 20. Ces moyens d'analyse sont situés vers la seconde partie extrême 21 voire même en aval c'est-à-dire au-delà.

Il peut être couplé à ces moyens d'analyse des moyens d'information 25 visuels ou sonores qui sont rendus actifs lorsque les moyens d'émission et de réception 15, 16 passent d'un milieu à l'autre en franchissant la séparation S.

Il est prévu un leste 23 situé vers les premier et second tronçons 8, 9 notamment vers leurs extrémités libres 13, 14.

Le support 5 comprend, sur sa longueur, en direction longitudinale V, deux graduations respectivement G1 et G2. Ces graduations sont des graduations en longueur. La première graduation G1 a comme zéro l'axe 17 et s'étend jusqu'à la seconde partie extrême 21. La seconde graduation G2 a comme zéro l'extrémité libre 13, 14 des premiers zéro tronçons 8, 9 et s'étend également vers la seconde partie extrême 21.

Les moyens d'analyse sont soit visuels, soit automatiques.

Le dispositif décrit est tel que, les moyens d'émission 15 étant mis en oeuvre, le passage par les moyens d'émission et de réception 15, 16 et l'axe 17 de la séparation S se traduit par un changement significatif des caractéristiques physiques des ondes analysées. Ce changement permet de repérer la position de cette séparation S.

L'invention concerne un réceptacle tel que 2 auquel est associé un dispositif tel que 1.

Le dispositif 1 est soit amovible, soit associé à demeure dans le réceptacle 2.

Dans ce dernier cas, le réceptacle 2 peut comporter plusieurs dispositifs tels que 1 dont les axes 17 sont placés à des niveaux différents.

L'invention concerne un procédé de détection du niveau des boues M1 accumulées au fond du réceptacle 2 au moyen du dispositif 1 décrit.

On dispose le dispositif 1 avec sa direction longitudinale verticalement, au regard du réceptacle 2 et de son contenu M1, M2 la partie extrème 7 étant tournée vers la surface libre 4 et la seconde partie extrême 21 étant placée au-dessus de la première partie extrême 7.

On enfonce progressivement le dispositif 1 à partir de sa première partie extrême 7 dans le réceptacle 2 et son contenu M1, M2.

Les moyens d'émission 15 étant mis en oeuvre, on détecte un changement significatif des caractéristiques physiques des ondes analysées lorsque l'axe 17 franchit la séparation S. On note alors la valeur (a) sur la première graduation G1.

Cette valeur (a) indique le niveau des boues M2 c'est-à-dire S par rapport au niveau de la surface libre 4.

Ce procédé peut permettre la mesure de la hauteur des boues.

Après avoir mesuré la valeur (a), on continue à enfoncer le dispositif 1 vers le fond 3 jusqu'à ce que ces extrémités libres 13, 14 touchent le fond 3. On note la valeur (b) sur la seconde graduation.

Par la différence (b) - (a) on obtient la valeur de la hauteur des boues M1.

Les valeurs (a) et (b) sont mesurées à l'intersection de la surface libre 4.

## Revendications

1. Dispositif de repérage de la position de la séparation (S) entre deux milieux fluides (M1, M2) présentant des caractéristiques physiques spécifiques différentes comprenant un support (5), rigide, étendu le long d'une direction longitudinale (V) ; des moyens (15) d'émission d'ondes dans une direction transversale (17), portés par le support (5) vers une première partie extrême (7) ; des moyens (16) de réception des ondes émises par les moyens d'émission (15), portés par le support (5) vers la première partie extrême (7) ; les moyens d'émission et les moyens de réception (15, 16) étant écartés l'un de l'autre d'une distance connue le long d'une direction transversale (17) et par un espace libre (10) dans lequel peut se trouver le milieu (M1 , M2) ; des moyens (20) de transmission des ondes reçues par les moyens de réception (16) le long du support (5) et jusque vers sa seconde partie extrême (21) ; les ondes émises, reçues, transmises étant choisies pour avoir des caractéristiques physiques fonction des caractéristiques physiques spécifiques du milieu fluide (M1, M2) où se trouvent les moyens d'émission et de réception (15, 16) ; des moyens d'analyse des ondes transmises situées vers la seconde partie extrême (21) du support ou en aval ; de telle manière que le passage par les moyens d'émission et de réception (15, 16) de la séparation (S) entre les deux milieux (M1, M2) se traduit par un changement significatif des caractéristiques physiques des ondes analysées, caractérisé par le fait que les moyens d'émission d'ondes, de réception, d'ondes et de transmission d'ondes (15, 16, 20) sont de type optique.

2. Dispositif selon la revendication 1, caractérisé par le fait qu'il inclut des moyens (22) de renvoi des ondes reçues par les moyens de réception (16), le long d'une direction transversale (H) et selon une direction longitudinale (V).

3. Dispositif selon la revendication 1, caractérisé par le fait que le support (5) est télescopique en plusieurs parties associées entre elles à demeure ou non.

4. Dispositif selon la revendication 1, caractérisé par le fait que les moyens de réception (16) et de renvoi (22) sont communs.

5. Dispositif selon la revendication 4 caractérisé par le fait que les moyens de réception et de renvoi (16, 22) comprennent un miroir incliné à 45° sur la direction longitudinale (V).

6. Dispositif selon l'une quelconque des revendications 1 à 5, caractérisé par le fait qu'il constitue un dispositif de détection de niveau ou de mesure de la hauteur des boues accumulées au fond d'un réceptacle (2), tel qu'une fosse septique.

7. Réceptacle tel qu'une fosse septique, destiné à recevoir des milieux fluides (M1, M2) notamment des boues accumulées au fond (3) et de l'eau décantée en surface, caractérisé par le fait qu'il lui est associé au moins un dispositif selon l'une quelconque des revendications 1 à 6.

8. Réceptacle selon la revendication 7, caractérisé par le fait que le dispositif (1) est amovible.

9. Réceptacle selon la revendication 7, caractérisé par le fait que le dispositif (1) est associé à demeure au réceptacle (2).

10. Procédé de détection du niveau des boues (M1) accumulées au fond d'un réceptacle (2) tel qu'une fosse septique au moyen d'un dispositif (1) selon la revendication (6) dans lequel on dispose le dispositif (1), verticalement, au regard du réceptacle (2) par sa première partie extrême (7) ; on enfonce progressivement le dispositif (1) dans le réceptacle (2) et son contenu (M1/M2) ; lorsque l'on détecte un changement significatif des caractéristiques physiques des ondes analysées, on note la valeur (a) sur la première graduation (G1) laquelle indique le niveau des boues par rapport au niveau de la surface libre (4).
